# EUROPÄISCHE PATENTANMELDUNG

(11) **EP 2 987 916 A2**
(43) Veröffentlichungstag der Anmeldung: **24.02.2016**
(21) Anmeldenummer: 15181682.4
(22) Anmeldetag: 20.08.2015
(51) Int. Cl.: E02F 3/36

(54) **SCHNELLWECHSELKUPPLUNG MIT SICHERUNG**

(30) Priorität: 20.08.2014 CH 12532014
(71) Anmelder: Josef Martin GmbH & Co. KG, 6751 Braz (AT)
(72) Erfinder: Lechtaler, Gerald, 6922 Wolfurt (AT)
(74) Vertreter: Riederer Hasler & Partner Patentanwälte AG

(57) **Zusammenfassung**

Die Erfindung betrifft eine Schnellwechselkupplung (11) zum Ankuppeln eines Anbaugeräts (13) an einem Baggerarm (14), mit einer Aufnahme- und Befestigungsvorrichtung (15), einer feststehenden Einführöffnung (17), welches an einem ersten Ende der Aufnahme- und Befestigungsvorrichtung ausgeformt oder befestigt ist, einem zwischen einer Schliessposition und einer Offenposition verschiebbaren Schliesselement (22) mit einer zweiten Einführöffnung (19), das an der Aufnahme- und Befestigungsvorrichtung (15) angeordnet ist und von dem ersten Ende weg- und zu diesem hin verschiebbar ist, zur Einklemmung der beiden Haltebolzen (23a,23b) des Anbaugeräts zwischen feststehender und verschiebbarer Einführöffnung und einem Aktuator (21), welcher an dem Support (15) festgelegt ist und das verschiebbare Schliesselement betätigt. Ein Klemmriegel (25), welcher von einer Entsicherungsposition in eine Sicherungsposition in die feststehende Einführöffnung (17) um eine Drehachse (33) verschwenkbar ist und mittels eines Betätigungselements (35) mit dem Aktuator (21) in Wirkverbindung steht, ist an der Aufnahme- und Befestigungsvorrichtung (15) angeordnet. Der Klemmriegel (25) befindet sich in der Entsicherungsposition, wenn sich das Schliesselement (22) in der Offenposition befindet. Das Betätigungselement (35) ist am Schliesselement (22) festgelegt und ist in der Verschlussposition frei von einer Wirkverbindung zum Klemmriegel (25).

## Beschreibung

### Gebiet der Erfindung

Die Erfindung betrifft eine Schnellwechselkupplung zum Ankuppeln eines Anbaugeräts an einem Baggerarm gemäss Oberbegriff des Anspruchs 1.

### Stand der Technik

Bei Baggern sind zum raschen Wechseln der Anbaugeräte, beispielsweise Baggerschaufeln unterschiedlicher Grösse, seit Langem Schnellwechselkupplungen bekannt. Diese Kupplungen besitzen zumeist vordere Klauen, welche in einen vorderen Bolzen des Anbaugerätes einfahren. Sodann werden mit Hilfe eines Aktuators eine oder mehrere hintere Klauen verschoben, die dann einen hinteren Bolzen des Anbaugeräts umschliessen, um das Anbaugerät an den Ausleger eines Baggerarms zu kuppeln. Beim Ankuppeln besteht jedoch die Gefahr, dass bei einer Winkelfehlstellung der Schnellkupplung die hinteren Klauen an dem hinteren Bolzen vorbeifahren und den Baggerführer im Glauben lassen, dass das Anbaugerät sicher mit dem Bagger verbunden ist. Tatsächlich jedoch ist das Anbaugerät nur mit dem vorderen Bolzen freischwingend in den vorderen Klauen gehalten. Es ist daher möglich, dass das schwere Anbaugerät aus grosser Höhe von dem Ende des Baggerarms herunterfällt. Solche Vorfälle haben bereits zu tödlichen Arbeitsunfällen geführt.

Um solche Unfälle zu verhindern, können die vorderen Klauen mit Sicherheitshebeln teilweise verschlossen werden, damit der vordere Bolzen nicht aus den vorderen Klauen gleiten kann.

In der WO 2013/048308 sind solche Sicherheitshebel gezeigt. Jeweils ein Sicherheitshebel verkleinert die Aufnahmeöffnung der ersten und zweiten Klaue indem er um eine Drehachse in die Klauenöffnung hinein verschwenkt wird. Die Sicherheitshebel sind mit einer Feder vorgespannt und geben daher die Klauenöffnungen selbsttätig frei. Zum Verschliessen werden die Sicherheitshebel gegen die Federvorspannung von jeweils einem Verschlusskolben in die Verschlussposition gedrückt. Die Verschlusskolben werden gemeinsam von einer Verschlussplatte betätigt, welche ihrerseits durch eine Kolbenstange mit einem Hydraulikzylinder in Verbindung steht. Der Hydraulikzylinder betätigt auch den Verschlussriegel, welcher den zweiten Bolzen des Anbaugeräts hält. Der Hydraulikzylinder ist zwischen den Verschlusskolben und dem Verschlussriegel angeordnet und verschiebt beim Schliessen der Schnellwechselkupplung Verschlussriegel und Verschlussplatte in entgegengesetzte Richtungen. Diese Verschiebung in entgegengesetzte Richtungen bedarf eines Hydraulikzylinders mit zwei separaten Hydraulikkammern. Der Hydraulikzylinder ist aufwendig und dementsprechend teuer. Auch steigt die Gefahr, dass bei zwei Hydraulikkammern eine ausfällt, da hier viele bewegte und abgedichtet Teile zum Einsatz kommen. Ferner ist die Druckübertragungskette vom Hydraulikzylinder zur Druckplatte, von dieser zu den Verschlusskolben und von diesen zu den Sicherheitshebeln sehr lange und kann an jeder Übertragungsstelle zu Fehlern und Abnützung führen.

Auch die DE 297 05 609 offenbart eine Sicherheitseinrichtung für eine Schnellwechselkupplung in Gestalt eines Klemmriegels. Der Klemmriegel ist in die vorderen Klauenöffnungen um einen feststehenden Drehpunkt hinein verschwenkbar. Zur Verschwenkung des Klemmriegels ist eine Schiebeplatte vorgesehen. Die Schiebeplatte bewegt sich mit der Zylinderbewegung mit bzw. ist mit dem verschiebbaren Verschlussriegel verbunden. In der Schiebeplatte ist eine Führungskulisse ausgeformt. Der Klemmriegel fährt bei der Bewegung der Schiebeplatte die Führungskulisse ab und wird dadurch in seiner Verschwenkbewegung geführt. Von Vorteil ist, dass die Führungskulisse derart ausgeformt ist, dass der Klemmriegel während der Schliessbewegung des Verschlussriegels möglichst frühzeitig den vorderen Bolzen sichert. Nachteilig ist jedoch, dass das Vorsehen einer Kulisse aufwendig ist und sich die Führungsbahn abnützen kann oder mit dem Klemmriegel verklemmen kann.

In ähnlicher Weise wie der zuletzt beschrieben Stand der Technik funktioniert die Schnellwechselkupplung gemäss der WO 2011/048413. Zur zusätzlichen Absicherung der Kupplung ist in die vordere Klaue ein Rückhaltehaken verschwenkbar. Wenn die Kupplung sich in der Verschlussposition befindet, die hintere Klaue also ausgefahren ist, so ist der Haken in die Öffnung der vorderen Klaue hinein verschwenkt und den Bolzen eines Anbaugeräts zusätzlich sichern kann. Die Bewegung des Hakens ist durch eine Schiebeplatte realisiert. Die Schiebeplatte ist mit dem Verschubmechanismus der hinteren Klaue verbunden. Der Haken ist in seiner Sicherungsposition durch eine Feder vorgespannt und durch die Schiebeplatte in die vordere Klaue hineingedrückt.

Wird die hintere Klaue in die Offenposition verschoben, so wir die Schiebeplatte nach vor verschoben. In der Schiebeplatte ist ein Schlitz vorgesehen, in welchen der vorgespannte Haken selbsttätig hinein verschwenken kann. Dadurch gibt der Haken in der Offenposition der Kupplung die vordere Klaue frei. Nachteilig ist an dieser Sicherungsmechanik, dass die Schiebeplatte und der Haken verklemmen können und ein Öffnen der Kupplung dadurch gestört sein kann. Nachteilig ist auch, dass der Übergang zwischen Platte und Haken während der Betätigung eines Anbaugerätes ständig belastet wird.

Die WO 2011/071394 zeigt eine Schnellkupplung eines Baggers, die in die feste und in die verschiebbare Halteklaue hineinverschwenkbare Sicherungsklinken aufweist. Die verschiebbare Halteklaue steuert die Sicherungsklinke der festen Halteklaue durch ihre Bewegung an. Zur Steigerung der Sicherheit ist die Sicherungsklinke in jeder Position der verschiebbaren Halteklaue verschlossen, selbst wenn die verschiebbare Halteklaue geöffnet ist. Lediglich in einer Position, in der die verschiebbare Halteklaue über die Verschlussstellung hinaus expandiert ist, ist die Sicherungsklinke geöffnet. Diese Sicherungslösung ist sehr aufwendig sowohl von konstruktiven als auch von bedienungstechnischen Gesichtspunkten betrachtet. Trotzdem kann das Anbaugerät auch nur von der offenen festen Halteklaue angehoben werden, wenn die verschiebbare Halteklaue vollständig expandiert ist. Eine Fehlbedingung ist daher trotz Sicherung beider Klauen nicht ausgeschlossen.

In der WO 2008/031590 A2 ist eine Schellkupplung für einen Bagger beschrieben, welche ein Blockierelement aufweist, welches um eine Achse zwischen einer Entsicherungsposition und einer Sicherungsposition verschwenkbar ist. In der Sicherungsposition umfasst das Blockierelement den ersten Haltebolzen einer Baggerschaufel. Ein Arretierhaken, welcher um eine Achse verdrehbar ist und von einem Aktuator angetrieben ist, umgreift in seiner Arretierposition den zweiten Haltebolzen der Baggerschaufel. Die beiden einander zugewandten Enden des Arretierhakens und des Blockierelements sind derart ausgeformt, dass der Arretierhaken in der Arretierposition nicht nur den zweiten Haltebolzen hält, sondern auch das Blockierelement hindert in die Entsicherungsposition zu verschwenken.

Die Verdrehbewegung des Arretierhakens korrespondiert mit der Verdrehbewegung eines vorgespannten Hebels. Die Vorspannung des Hebels ermöglicht, dass der Hebel in jeder Position an dem Arretierhaken anliegt. Der Hebel hält das Blockierelement in seiner Entsicherungsposition, wenn der Arretierhaken sich in seiner Offenposition befindet. Wird der Arretierhaken in die Arretierposition verschwenkt, so gibt der Hebel das Blockierelement frei und dieses kann in die Sicherungsposition verschwenken. Ein ungewolltes Öffnen des Blockierelements ist neben der oben erwähnten Blockierung durch den Arretierhaken auch dadurch verunmöglicht, dass die Schnellkupplung in eine Position verschwenkt werden muss, in welcher das Blockierelement mit Hilfe der Schwerkraft in die Entsicherungsposition aufklappen kann. Das Abkoppeln der Baggerschaufel ist durch das Vorsehen dieser Prozedur jedoch aufwendig und dementsprechend zeitintensiv. Der ganze Aufbau der Schnellwechselkupplung ist kompliziert und auch relativ wartungsintensiv, da eine Mehrzahl von sich um Lager drehende und aneinander reibende Bauteile vorhanden sind.

### Auf gabe der Erfindung

Um die oben genannten Nachteile zu überwinden, ist es Ziel der vorliegenden Erfindung, eine verbesserte Sicherheitseinrichtung für eine Schnellwechselkupplung vorzuschlagen, welche einfach und mit möglichst wenigen Einzelteilen aufgebaut ist und dementsprechend zuverlässig arbeitet. Ferner sollen die äusseren Abmessungen der Schnellwechselkupplung trotz Vorsehen eines Sicherheitselements im Wesentlichen unverändert bleiben.

### Beschreibung

Erfindungsgemäss wird die Aufgabe bei einer Vorrichtung gemäss Oberbegriff des Anspruchs 1 dadurch gelöst, dass dieses in der Schliessposition frei von einer Wirkverbindung zum Klemmriegel ist. Dies hat den Vorteil, dass Kräfte herrührend vom Haltebolzen des Anbaugeräts während des Baggerbetriebs keine Auswirkungen auf das Betätigungselement haben. Von Bedeutung ist, dass das Betätigungselement nicht zum Fixieren des Klemmriegels in der Sicherungsposition dient. Dementsprechend kleiner und schwächer kann das Betätigungselement dimensioniert werden, da es nur ausreichend stabil sein muss, um den Klemmriegel in die Entsicherungsposition überzuführen. Ein kleineres und schmäleres Betätigungselement führt auch dazu, dass die Schnellwechselkupplung nur unwesentlich grösser ist als ohne die Sicherungsvorkehrung. Da das Betätigungselement während dem Arbeiten mit dem Anbaugerät nicht belastet wird, zeichnet sich dieses durch eine lange Haltbarkeit und einen geringen Wartungsaufwand aus. Der räumliche Abstand zwischen Betätigungselement und Klemmriegel wird derart gewählt, dass der Klemmriegel beim Öffnen der Kupplung nicht sofort verschwenkt wird, sondern verzögert, wenn er in Wirkverbindung mit dem Betätigungselement tritt. In der Schliessstellung kann der Abstand zwischen Betätigungselement und Klemmriegel zwischen 0.5 cm und 4 cm und bevorzugt zwischen 1,0 und 3 cm betragen. Bevorzugt ist, wenn das Betätigungselement möglichst kurz ist, damit der Riegel die Einführöffnung möglichst spät freigibt.

In einer besonders bevorzugten Ausführungsform ist das Betätigungselement mit einem ersten Ende am Schliesselement festgelegt. Die Steuerung des Klemmriegels ist daher denkbar einfach aufgebaut. Das Betätigungselement ist dementsprechend zuverlässig und einfach zu warten bzw. zu tauschen. Ein bedeutender Vorteil ist, dass das Betätigungselement keinen eigenen Aktuator oder Antrieb benötigt.

Zweckmässigerweise ist der Klemmriegel einteilig und im Abstand zur feststehenden Einführöffnung verschwenkbar angeordnet. Der Klemmriegel ist durch seine Einteiligkeit sehr stabil. Denkbar ist es aber auch, den Klemmriegel mehrteilig auszuführen, um Bereiche, welche stärke beansprucht sind, separat tauschen zu können. Damit nach dem Aufnehmen das Anbaugerät nicht herunterfallen kann, muss sich der Klemmriegel auch auf dieser Seite befinden. Auch sind der Klemmriegel und die Schubstange an dieser Seite der Einführöffnung besser geschützt.

Vorteilhaft umfasst die Aufnahme- und Befestigungsvorrichtung zwei Seitenteile, die durch eine Verbindungsplatte zusammengehalten sind. Die Seitenteile können dabei aus mehreren Einzelteilen zusammengesetzt sein. Üblicherweise sind der untere Abschnitt des Seitenteils an das Anbaugerät und der obere Abschnitt an die Aufnahme des Baggerauslegers angepasst. Eine solche Konstruktion findet sich in vielen bekannten Schnellwechselkupplungen. Anstelle der Verbindungsplatte können jedoch auch Verbindungsprofile oder dergleichen eingesetzt sein.

Vorteilhaft ist die Drehachse des verschwenkbaren Klemmriegels in Einführrichtung gesehen versetzt zum Mittelpunkt der Einführöffnung, d.h. weiter nach aussen versetzt, angeordnet. Dabei soll unter dem Mittelpunkt der Einführöffnung jener Punkt verstanden werden, der mit der Mittelachse eines am Grund der Einführöffnung anliegenden Haltebolzens übereinstimmt.

Wenn der Klemmriegel länger als der kürzeste Abstand zwischen der oberen Kante der Einführöffnung und einem an der Aufnahme- und Befestigungsvorrichtung vorgesehenen Gegenlager für den Klemmriegel ist, kann dieser in der Sicherungsposition in die Einführöffnung ragen und diese verengen. Dabei ist der Klemmriegel so bei der Einführöffnung angeordnet, dass eine entgegen der Einführrichtung gerichtete Kraft, den Klemmriegel noch mehr in die Sicherungsposition drückt. Durch die vorgeschlagene Konstruktion werden die auf den Klemmriegel wirkenden Kräfte in die Klemmriegelachse und zu einem erheblichen Teil in das Gegenlager eingeleitet.

Zweckmässigerweise dient eine die beiden Seitenteile verbindende Verbindungsplatte als Gegenlager für das eine Ende des Klemmriegels. Dies hat den Vorteil, dass ein bereits vorhandenes Teil verwendet werden kann.

Vorteilhaft ist die Länge des Betätigungselements um eine bestimmte Distanz kürzer als der Verschiebeweg des Schliesselements. Dies hat folgende Vorteile: Erstens, wird dadurch der Verschleiss des Betätigungselements minimiert, und zweitens, wird der Klemmriegel beim Öffnen der Kupplung mit zeitlicher Verzögerung geöffnet.

Vorteilhaft verbleibt der Klemmriegel während des Öffnungsvorganges möglichst lange, d.h. bis das Schliesselement wenigstens ein Viertel, vorzugsweise wenigstens ein Drittel und besonders bevorzugt wenigstens die Hälfte des Öffnungsweges zurückgelegt hat, in der Sicherungsposition. Dies hat den Vorteil, dass eine Fehlbedienung der Schnellwechselkupplung erst dann zum Tragen kommt, wenn die Kupplung nahezu vollständig geöffnet ist. Aus diesem Grund ist es vorteilhaft, wenn das Betätigungselement erst dann mit dem Klemmriegel zusammenwirkt, wenn das Schliesselement beim Öffnen mindestens den halben, vorzugsweise zwei Drittel und besonders bevorzugt drei Viertel des Verschiebewegs zurückgelegt hat.

In einer besonders bevorzugten Ausführungsform ist der Klemmriegel zweiarmig und weist einen Last- und einem Kraftarm auf. Durch die relative Länge der Arme lässt sich die Kraft steuern, welche zum Öffnen des Klemmriegels benötigt ist. So muss der Klemmriegel auch dann geöffnet werden können, wenn er durch den Haltebolzen verklemmt ist.

In einer weiteren besonders bevorzugten Ausführungsform ist am Kraftarm eine Anschlagfläche ausgebildet, welche in der Sicherungsposition des Klemmriegels an einem Gegenlager der Aufnahme- und Befestigungsvorrichtung anschlägt. Dies hat den Vorteil, dass auf den Klemmriegel und die Klemmriegelachse wirkenden Kräfte teils in die Aufnahme- und Befestigungsvorrichtung eingeleitet werden. Dadurch wird die Klemmriegelachse nachhaltig entlastet, und kann somit dünner dimensioniert sein. Das Gegenlager ist eine Anschlagfläche, die Teil der Verbindungsplatte sein kann. Die am Umfang des Klemmriegels ausgebildete Anschlagfläche lässt grösstenteils nur Druckbelastungen zu und verhindert andere Belastungsarten wie Biege- oder Torsionsspannungen.

In einer weiteren bevorzugten Ausführungsform ist das freie Ende des Lastarms, welches in der Sicherungsposition in die feststehende Einführöffnung ragt, an die Form des Haltebolzens angepasst. Dies hat den Vorteil, dass ein flächiger Kontakt zwischen dem Haltebolzen und dem einen Ende des Klemmriegels zustande kommt und der Verschleiss daher minimiert ist. Kräfte herrührend vom in der feststehenden Einführöffnung aufgenommenen Haltebolzen können nur in eine Richtung wirken, die der Öffnungsrichtung des Klemmhebels entgegengesetzt sind. Der Klemmriegel wird daher durch eine Kraft entgegen der Einführrichtung des Haltebolzens daher noch fester verschlossen.

Mit Vorteil wirkt in der Offenposition des Schliesselements das Betätigungselement derart mit dem Klemmriegel zusammen, dass sich der Klemmriegel in der Entsicherungsposition befindet und die Einführöffnung freigibt. Nur so können der erste und zweite Haltebolzen in gewohnter Weise abgekuppelt werden.

In einer weiteren besonders bevorzugten Ausführungsform ist der Klemmriegel in die Sicherungsposition vorgespannt. Ist der Klemmhebel nicht belastet, so verschwenkt er von selbst in die Sicherungsposition. Deshalb muss das Betätigungselement den Klemmriegel in der Sicherungsposition nicht halten und kann von diesem beabstandet sein. Bevorzugt wird die Vorspannung durch eine Spiralfeder erzeugt.

In einer weiteren Ausführungsform wirkt der Klemmriegel in der Offenposition der verschiebbaren Einführöffnung als ein Schnappverschluss für einen der Bolzen des Anbaugeräts. Diese Ausführungsform ermöglicht es, dass der Klemmriegel in der Sicherungsposition ist, auch wenn das Schliesselement noch nicht vollständig geschlossen ist. Beim Einfahren verschwenkt der Haltebolzen den Klemmriegel, welcher dann selbsttätig in die Sicherungsposition zurückschnappt. Zum Öffnen des Klemmriegels kann eine zweite Offenposition vorgesehen sein, indem das bewegliche Schliesselement noch weiter geöffnet wird. Erst beim Erreichen der zweiten Offenposition tritt das Betätigungselement in Wirkverbindung mit dem Klemmriegel.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine Explosionsdarstellung der erfindungsgemässen Schnellwechselkupplung mit einem Klemmriegel;
- Figur 2:: einen Längsschnitt durch die Schnellwechselkupplung in einer Offenstellung;
- Figur 3:: einen Längsschnitt durch die Schnellwechselkupplung in einer Schliessstellung;
- Figur 4:: eine Draufsicht auf die aufgeschnittene Schnellwechselkupplung in der Schliessstellung;
- Figur 5:: einen Längsschnitt durch einen Baggerarm mit Schnellwechselkupplung und angekuppeltem Anbaugerät und
- Figur 6:: eine Detailansicht des Klemmriegels und des vorderen Haltebolzens in zwei unterschiedlichen Positionen.

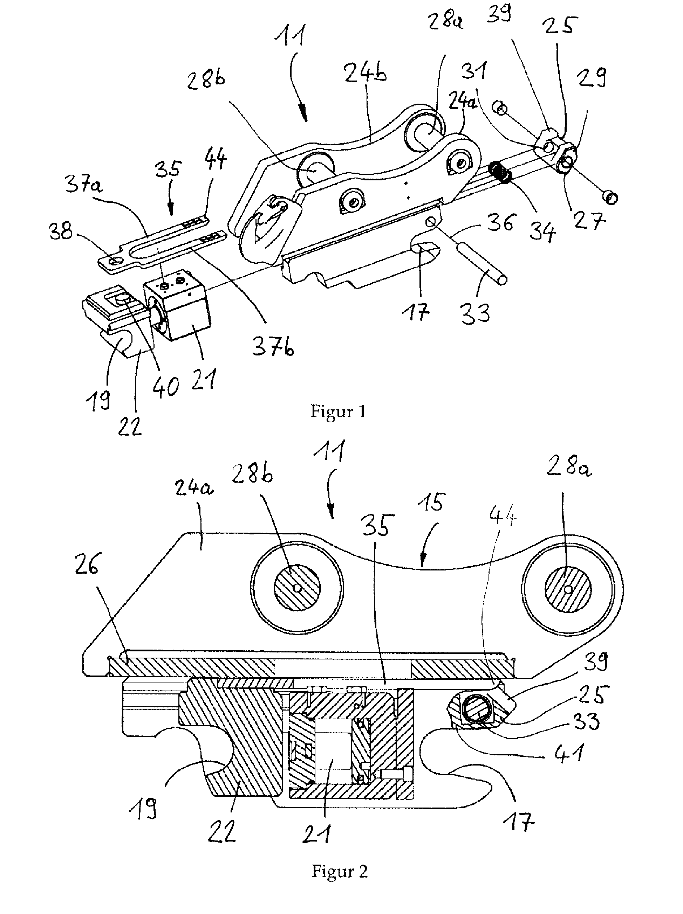

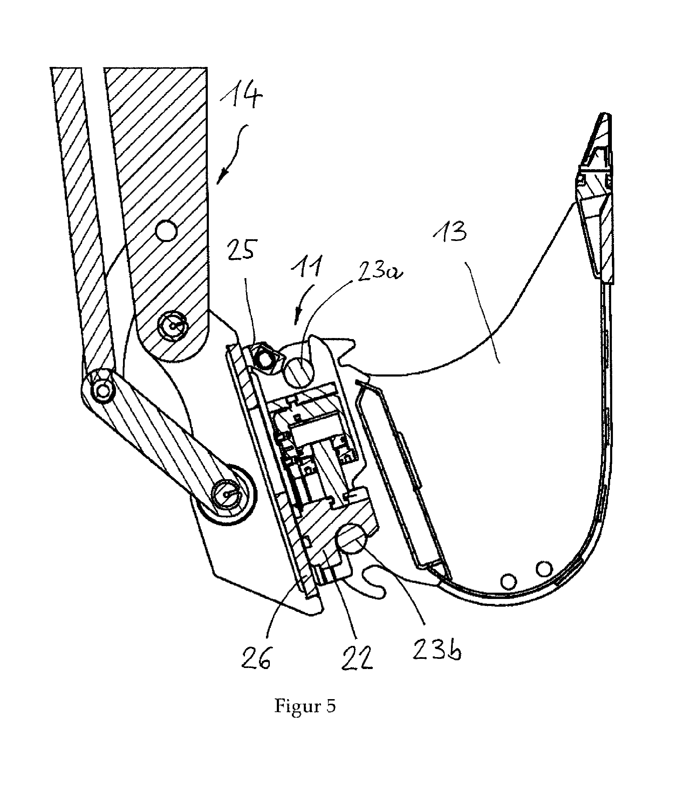

Die in den Figuren 1 bis 6 gezeigte, erfindungsgemässe Schnellwechselkupplung zum Ankuppeln eines Anbaugeräts 13 (Figur 5) an einem Baggerarm 14 ist gesamthaft mit dem Bezugszeichen 11 benannt. Die Schnellwechselkupplung 11 umfasst eine Aufnahme- und Befestigungsvorrichtung 15, an der an einem ersten Ende feststehende Einführöffnungen 17 für die Aufnahme eines ersten Haltebolzens 23a ausgebildet sind. An der Aufnahme- und Befestigungsvorrichtung 15 ist ausserdem ein Aktuator 21 angeordnet, der der Betätigung eines beweglichen Schliesselements 22 dient, wobei das Schliesselement 22 mit dem Aktuator 21 in Verbindung steht. Das Schliesselement 22 definiert eine zweite Einführöffnung 19, die der Aufnahme eines zweiten Haltebolzens 23b dient und abgewandt zu den ersten Einführöffnungen 23a ist. Mit Hilfe des Aktuators 21 kann das Schliesselement 22 von einer Offenposition, in der die Einführöffnungen 17,19 einen ersten Abstand voneinander aufweisen, in eine Schliessposition bewegen, in der die Einführöffnungen 17,19 einen zweiten Abstand einnehmen, wobei der zweite Abstand grösser ist als der erste Abstand und im Wesentlichen mindestens dem Abstand der ersten und zweiten Haltebolzen 23a, 23b entspricht. Der Aktuator 21 kann hydraulisch, elektrisch oder pneumatisch betätigbar sein.

Die Aufnahme- und Befestigungsvorrichtung 15 umfasst zwei Seitenteile 24a, 24b, die durch ein Verbindungsstück, z.B. eine Verbindungsplatte 26 miteinander verbunden sind. Zwei im Abstand zum oberen Rand der Seitenteile 24a,24b vorgesehene Befestigungsbolzen 28a,28b dienen der Befestigung der Schnellwechselkupplung an einem Baggerarm. Der Aktuator 21 ist an einer Wand 30 angeordnet, die sich quer zur Verbindungsplatte 26 erstreckt und als Gegenlager des Aktuators dient. Das Schliesselement 22 ist in Führungsbahnen 32, die in den Seitenteilen 24a, 24b eingearbeitet sind, geführt.

Zum Ankuppeln eines Anbaugeräts wird die Schnellwechselkupplung 11 in einem Winkel auf das Anbaugerät 13 derart abgesenkt, dass der erste Haltebolzen 23a von den ersten Einführöffnungen 17 erfasst wird. Danach wird die Schnellwechselkupplung 11 gegen das Anbaugerät verschwenkt, bis die Seitenteile 24,24b am zweiten Haltebolzen 23b anliegen. Wird das bewegliche Schliesselement 22 mit der Einführöffnung 19 dann mittels des Aktuators 21 von der Offenposition in die Schliessposition verschoben, so erfasst es den zweiten Haltebolzen 23b und das Anbaugerät 13 ist an der Schnellwechselkupplung angekuppelt.

Falls die Schnellwechselkupplung 11 sich beim Ankuppeln jedoch nicht in der richtigen Stellung befindet und die Einführöffnung 19 des beweglichen Schliesselements 22 beim Schliessen an dem zweiten Haltebolzen 23b unbeabsichtigt vorbeifährt, so besteht Gefahr, dass das Anbaugerät 13 sich nach dem Anheben von der Schnellwechselkupplung 11 löst und herunterfällt. Diese Gefahr besteht insbesondere, wenn sich der Baggerfahrer dieser Tatsache nicht bewusst ist. Um diese Gefahr zu vermeiden, wurden schon Klemmriegel eingesetzt, die den Haltebolzen 23a in den Einführöffnungen 17 halten resp. blockieren und ein Ausfahren des ersten Haltebolzens 23a in jedem Fall verhindern sollen, unabhängig davon, ob auch der zweite Haltebolzen 23b in der zweiten, beweglichen Einführöffnung 19 ordnungsgemäss aufgenommen ist oder nicht. Diese Klemmriegel des Stands der Technik haben allerdings den grossen Nachteil, dass diese durch die im Betrieb auf sie wirkenden Kräfte einer starken Abnutzung unterliegen und entsprechend massiv ausgebildet sein müssen, wodurch die Schnellwechselkupplung grösser dimensioniert werden muss. Eine grösser dimensionierte Schnellwechselkupplung hat den jedoch Nachteil, dass die Löffel-Grabkraft mit zunehmender Bauhöhe der Schnellwechselkupplung abnimmt.

Erfindungsgemäss ist nun ein Klemmriegel 25 vorgesehen, der als ein zweiarmiger Klemmhebel mit einem Lastarm 27 und einem Kraftarm 29 ausgeführt ist. Der Klemmriegel 25 ist um eine Drehachse 36 drehbar, wobei der der Einführöffnung 17 zugewandte Abschnitt des Klemmriegels 25 der Lastarm 27, und der der Einführöffnung 17 abgewandte Abschnitt des Klemmriegels 25 der Kraftarm 29 ist. In den Seitenteilen 24a, 24b der Aufnahme- und Befestigungsvorrichtung 15 sind Durchgangsöffnungen 31 realisiert, in welchen eine Klemmriegelachse 33 aufgenommen ist. Auf die Klemmriegelachse 33 aufgesteckt ist der bewegliche Klemmriegel 25, der seitlich von den Seitenteilen 24a, 24b gehalten ist. Der Klemmriegel 25 kann von einer Entsicherungsposition (Figur 2), in der die Einführöffnung 23a freigegeben ist, in eine Sicherungsposition verschwenkt werden, in der der Klemmriegel 25 die Einführöffnung 17 verengt. Durch eine Spiralfeder 34, welche auf die Klemmriegelachse 33 aufgesteckt ist und die sich an den Seitenteilen 24a, 24b abstützt, ist der Klemmhebel 25 in die Sicherungsposition vorgespannt. Das bedeutet, dass der Klemmriegel 25 selbsttätig in die Sicherungsposition zurückkehrt, wenn er nicht durch äussere Krafteinwirkung in der Entsicherungsposition gehalten ist.

Der Klemmriegel 25 steht mit einem Betätigungselement 35 in Wirkverbindung derart, dass dieser sich in der Entsicherungsposition befindet, wenn das Schliesselement 22 mit der zweiten Einführöffnung 19 sich in der Offenposition befindet und umgekehrt sich in der Sicherungsposition befindet, wenn das Schliesselement 22 sich in der Schliessposition befindet. Zu diesem Zweck ist das erste Ende des Betätigungselements 35 am Schliesselement 22 festgemacht, sodass es die Bewegung desselben mitmacht. Vorliegend weist das Betätigungselement 35 eine Bohrung 38 auf, in die ein am Schliesselement vorhandener Zapfen 40 eingreifen kann. Auf diese Weise ist das Betätigungselement 35 formschlüssig an dem verschiebbaren Schliesselement 22 befestigt. Dies ermöglicht einen raschen Austausch des Betätigungselements 35, falls es beschädigt oder abgenutzt sein sollte. Gemäss dem gezeigten Ausführungsbeispiel ist das Betätigungselement gabelförmig mit zwei Armen 37a,37b ausgebildet, damit der Aktuator für Servicezwecke gut zugänglich ist.

Der Lastarm 27 und der Kraftarm 29 sind so geformt, dass eine maximale Wirkung bei gleichzeitig geringer Belastung des Klemmriegels 25 zu erreichen ist. Der Klemmriegel 25 ist vorzugsweise einstückig ausgebildet, um eine hohe Belastbarkeit zu ermöglichen. Das Ende des Kraftarms 29 ist als eine Anschlagfläche 39 ausgebildet, die in der Sicherungsposition des Klemmriegels 25 mit der Verbindungsplatte 26 zusammenwirkt. Kräfte, die auf den ersten Haltebolzen 23a einwirken und eine Verschiebung desselben in der feststehenden Einführöffnung 17 verursachen können, werden somit auch auf den Klemmriegel übertragen. Dadurch, dass der Klemmriegel 25 jedoch in der Sicherungsposition mit der Anschlagfläche 39 direkt an der Unterseite der Verbindungsplatte 26 anliegt, können die Kräfte zu einem grossen Teil an die stabile Verbindungsplatte abgeleitet werden. Der dem Betätigungselement 35 zugewandte Bereich des Lastarms 27 ist abgeschrägt, wodurch der Lastarm 27 möglichst spät mit den Holmenenden in Kontakt treten, wenn sich die Holmenenden in Richtung des Klemmhebels 25 bewegen. Beim Öffnen der Schnellwechselkupplung 11 wird der Klemmhebel 25 daher möglichst spät geöffnet. Die Holmenenden bzw. die offenen Enden 44 der Arme 37a,37 b sind abgerundete bzw. abgeschrägt, damit die Linearbewegung des Betätigungselements 35 gleitend und mit möglichst geringer Reibung auf den Klemmriegel 25 übertragbar ist. Die Berührung der offenen Enden 44 und des Klemmriegels 25 erfolgt daher besonders schonend an einer Berührungsfläche und nicht an einer Berührungslinie. Das Betätigungselement ist linear entlang der Verbindungsplatte 26 geführt. Die Verbindungsplatte 26 wirkt wie eine Schiene entlang welcher das Betätigungselement 35 linear geführt ist.

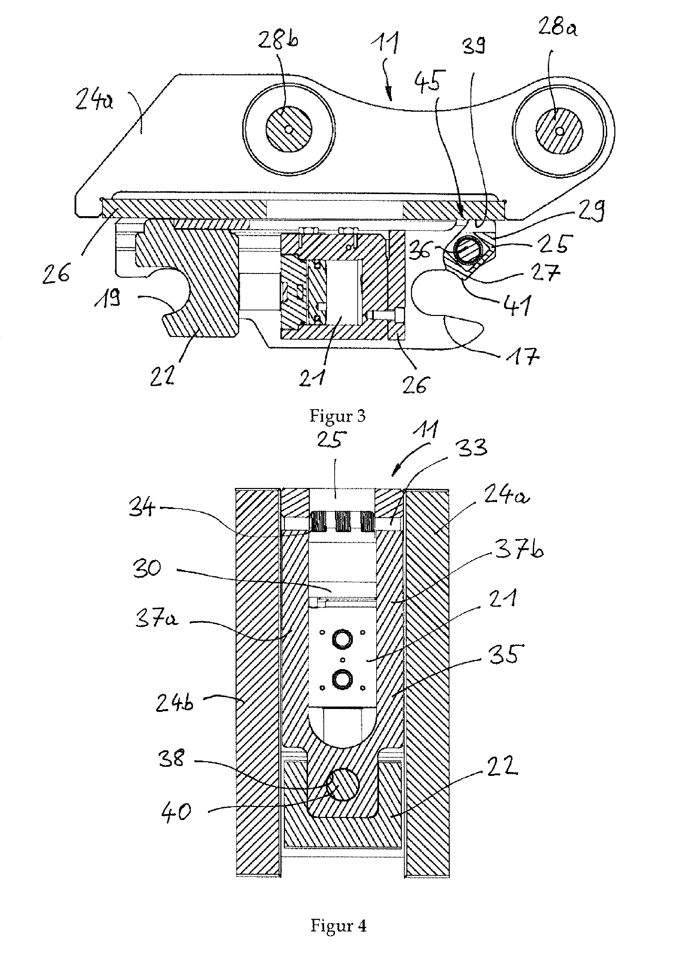

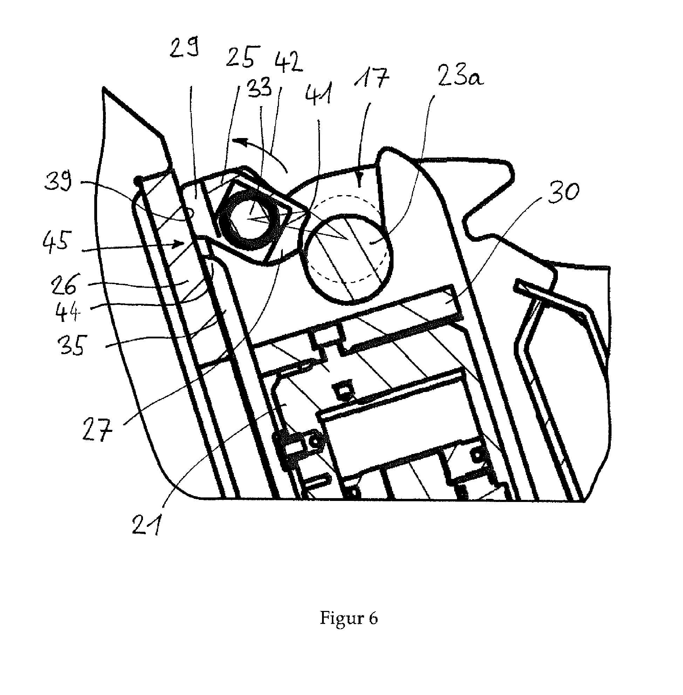

In Figur 3, in welcher der Klemmriegel 25 in der Sicherungsposition dargestellt ist, lässt sich die besondere Ausgestaltung des freien Lastarmendes erkennen. An dem Lastarmende ist eine Erhebung 41 ausgeformt, welche vom Grund der feststehenden Einführöffnung 17 abgewandt ist. In der Sicherungsposition ragt die Erhebung 41 in die feststehende Einführöffnung 17. Das freie Lastarmende ist an die Kontur des ersten Haltebolzens 23a angepasst und umschliesst diesen in der Sicherungsposition teilweise. In der Sicherungsposition nimmt der Klemmriegel 25 eine Schrägstellung ein, in der er schräg in die feststehende Einführöffnung ragt und diese verengt. Ein Öffnen des Klemmhebels 25 durch den ersten Haltebolzen 23a ist ausgeschlossen, da eine Kraftwirkung des ersten Haltebolzens 23a den Klemmhebel 25 im Gegenuhrzeigersinn nur noch stärker an die Verbindungsplatte 26 presst. Dies ist in Figur 6 durch den Pfeil 42 verdeutlicht. Ein Freigeben der Einführöffnung 17 ist nur möglich, wenn der Klemmriegel 25 im Uhrzeigersinn verschwenkt wird. In Figur 6 ist der erste Haltebolzen 23a in unterbrochener Linienführung gezeigt, wenn er den Klemmhebel 25 belastet. Das Dreieck 43 zeigt, dass die Basis des Dreiecks die Verbindungsgerade der Mittelpunkte der Klemmriegelachse 33 und erstem Haltebolzen 23a ist. Die Berührung von Erhebung 41 und erstem Haltebolzen liegt nicht auf der Basis, sondern in Richtung der offenen Seite der feststehenden Einführöffnung 17. Eine Kraft des ersten Haltebolzens 23a auf den Klemmhebel 25 erzeugt daher eine Reaktionskraft, welche die Anschlagfläche 39 noch stärker an die Verbindungsplatte 26 drückt und den Klemmriegel 25 daher noch stärker verklemmt.

Wird ein Anbaugerät 13 an der Schnellwechselkupplung 11 angekuppelt, so befindet sich die Schnellwechselkupplung 11 zunächst in der Offenposition (Figur 2). In dieser Position befindet sich der Aktuator 21 und das bewegliche Schliesselement 22 mit der Einführöffnung 19 in einer zurückgezogenen Stellung (Offenposition). In der Offenposition ist auch das Betätigungselement 35 in Richtung des Klemmriegels 25 verschoben, da dieses mit dem verschiebbaren Schliesselement gekoppelt ist. Das zweite Ende des Betätigungselements 35 wirkt in dieser Stellung mit dem Kraftarm 29 des Klemmriegels 25 zusammen und hält diesen gegen die Vorspannung der Spiralfeder 34 in der Entsicherungsposition. In dieser Offenstellung kann die feststehende Einführöffnung 17 an den ersten Haltebolzen 23a gelegt werden.

In der Schliessposition ist Aktuator 21 ausgefahren, und die Einführöffnung 19 des Schliesselements 22 umgreift den zweiten Haltebolzen 23b teilweise. In der Schliessposition befindet sich das zweite Ende des Betätigungselements 35 im Abstand vom Klemmriegel 25. Entsprechend ist dieser durch die Spiralfeder 34 in die Sicherungsposition vorgespannt ist. Das Betätigungselement 35 besitzt in dieser Position einen Abstand 45 vom Klemmriegel 25. Dadurch, dass das Betätigungselement 35 in der Schliessposition frei von einer Wirkverbindung zum Klemmhebel 25 ist, können keine Kräfte vom Klemmriegel 25 auf das Betätigungselement übertragen werden. Dies hat den Vorteil, dass die Wirk - bzw. die Betätigungsflächen geschont werden und kein Verschleiß während des normalen Betriebs auftritt. Verschleiss könnte ansonsten auf Grund von Vibrationen resultieren, z.B. Hammerbetrieb. Die auf den Klemmriegel 25 einwirkenden Kräfte werden über die Anschlagfläche 39 zu einem erheblichen Teil in die Verbindungplatte 26 eingeleitet. Die Länge des Betätigungselements 35 wird so gewählt, dass der Klemmhebel 25 verzögert geöffnet wird, wenn das bewegliche Schliesselement 25 mit der Einführöffnung 19 in die Offenposition verschoben wird. Bevorzugt ist die Länge des Betätigungselements - je nach Grösser der Schnellwechselkupplung - um 0.5 cm bis 4 cm, vorzugsweise um 1,0 bis 3 cm kürzer als der Verschiebeweg des Schliesselements.

### Legende:

- 11: Schnellwechselkupplung
- 13: Anbaugerät
- 14: Baggerarm
- 15: Aufnahme- und Befestigungsvorrichtung
- 17: Feststehende Einführöffnung
- 19: Verschiebbare Einführöffnung
- 21: Aktuator
- 22: Schliesselement
- 23a, 23b: Erster und zweiter Haltebolzen des Anbaugeräts
- 24a, 24b: Seitenteile
- 25: Klemmriegel, Klemmhebel
- 26: Verbindungsplatte
- 27: Lastarm
- 28: Befestigungsbolzen
- 29: Kraftarm
- 30: Wand
- 31: Durchgangsöffnung
- 32: Führungsbahnen
- 33: Klemmriegelachse
- 34: Spiralfeder
- 35: Betätigungselement
- 36: Drehachse
- 37a, 37: Arme des Betätigungselements
- 38: Bohrung
- 39: Anschlagfläche
- 40: Zapfen
- 41: Erhebung des Lastarmendes
- 42: Pfeil, Drehrichtung
- 43: Dreieck
- 44: Armenden
- 45: Abstand

## Patentansprüche

1. Schnellwechselkupplung (11) zum Ankuppeln eines Anbaugeräts (13) an einem Baggerarm (14), mit
- einer Aufnahme- und Befestigungsvorrichtung (15),
- einer feststehenden ersten Einführöffnung (17), welche an einem ersten Ende der Aufnahme- und Befestigungsvorrichtung (15) ausgeformt oder befestigt ist,
- einem an der Aufnahme- und Befestigungsvorrichtung angeordneten, beweglichen Schliesselement (22) mit einer zweiten Einführöffnung (19), das von einer Offenposition, in der ein Anbaugerät (13) an- oder abgekuppelt werden kann, in eine Schliessstellung bewegt werden kann, in der die Haltebolzen (23a,23b) des Anbaugeräts (13) durch die Einführöffnungen (17,19) in Eingriff genommen und festgeklemmt sind,
- einem Aktuator (21), der an der Aufnahme- und Befestigungsvorrichtung (15) angeordnet ist und das bewegliche Schliesselement (22) betätigt und
- einem Klemmriegel (25), der von einer Entsicherungsposition, in der die Einführöffnung (17) freigegeben ist, in eine Sicherungsposition bewegbar ist, in der die feststehende Einführöffnung (17) verengt ist und ein Ausfahren eines Haltebolzens (23a) verunmöglicht, und
- einem Betätigungselement (35), das mit dem Aktuator (21) in Wirkverbindung steht, wobei
- sich der Klemmriegel (25) in der Entsicherungsposition befindet, wenn sich das Schliesselement (22) in der Offenposition befindet und
- der Klemmriegel (25) mittels einer Linearbewegung des Betätigungselements (35) von der Entsicherungsposition in die Sicherungsposition verschwenkbar ist,
**dadurch gekennzeichnet,**
**dass** das Betätigungselement (35) in der Schliessposition der Schnellwechselkupplung (11) frei von einer Wirkverbindung zum Klemmriegel (25) ist.

2. Schnellwechselkupplung nach Anspruch 1, **dadurch gekennzeichnet, dass** das Betätigungselement (35) mit einem ersten Ende am Schliesselement (22) festgelegt ist.

3. Schnellwechselkupplung nach Anspruch 1 oder 2, **dadurch gekennzeichnet, dass** der Klemmriegel (25) vorzugsweise einstückig ausgebildet ist und im Abstand von der feststehenden Einführöffnung (17) an der Aufnahme- und Befestigungsvorrichtung verschwenkbar angeordnet ist.

4. Schnellwechselkupplung nach einem der Ansprüche 1 bis 3, **dadurch gekennzeichnet, dass** die Aufnahme- und Befestigungsvorrichtung (15) zwei Seitenteile (24a,24b) umfasst, die durch eine Verbindungsplatte (26) zusammengehalten sind.

5. Schnellwechselkupplung nach einem der Ansprüche 1 bis 4, **dadurch gekennzeichnet, dass** die Drehachse (36) des verschwenkbaren Klemmriegels (25) in Einführrichtung gesehen versetzt zum Mittelpunkt der Einführöffnung (17) angeordnet ist.

6. Schnellwechselkupplung nach einem der Ansprüche 1 bis 5, **dadurch gekennzeichnet, dass** der Klemmriegel (25) länger ist als der kürzeste Abstand zwischen der Einführöffnung (17) und einem an der Aufnahme- und Befestigungsvorrichtung (15) vorgesehenen Gegenlager (26) für den Klemmriegel (25).

7. Schnellwechselkupplung nach Anspruch 6, **dadurch gekennzeichnet, dass** die Verbindungsplatte (26) als Gegenlager für das eine Ende des Klemmriegels (25) dient.

8. Schnellwechselkupplung nach einem der Ansprüche 1 bis 7, **dadurch gekennzeichnet, dass** die Länge des Betätigungselements (35) kürzer als der Verschiebeweg des Schliesselements (22) ist.

9. Schnellwechselkupplung nach einem der Ansprüche 1 bis 3, **dadurch gekennzeichnet, dass** der Klemmriegel (25) einen Last- und einen Kraftarm (27,29) aufweist.

10. Schnellwechselkupplung nach einem der Ansprüche 1 bis 9, **dadurch gekennzeichnet, dass** das zweite Ende des Betätigungselements (35) und die dem Betätigungselement zugewandte Seite des Kraftarms (29) so ausgebildet sind, dass beim Zusammenwirken ein Flächenkontakt zustande kommt.

11. Schnellwechselkupplung nach Anspruch 9 oder 10, **dadurch gekennzeichnet, dass** am Kraftarm (29) eine Anschlagfläche (39) ausgebildet ist, welche in der Sicherungsposition des Klemmriegels (25) am Gegenlager (26) der Aufnahme- und Befestigungsvorrichtung (15) anschlägt.

12. Schnellwechselkupplung nach einem der Ansprüche 9 bis 11, **dadurch gekennzeichnet, dass** das freie Ende des Lastarms (27), das in der Sicherungsposition in die feststehende Einführöffnung (17) ragt, an die Form des Haltebolzens (23a) angepasst ist.

13. Schnellwechselkupplung nach einem der Ansprüche 1 bis 12, **dadurch gekennzeichnet, dass** in der Offenposition des Schliesselements (22) das Betätigungselement (35) mit dem Klemmriegel (25) derart zusammenwirkt, dass sich der Klemmriegel (25) in der Entsicherungsposition befindet.

14. Schnellwechselkupplung nach einem der Ansprüche 1 bis 9, **dadurch gekennzeichnet, dass** der Klemmriegel (25) mittels eines Federelements (34) in die Sicherungsposition vorgespannt ist.

15. Schnellwechselkupplung nach einem der Ansprüche 1 bis 11, **dadurch gekennzeichnet, dass** der Klemmriegel (25) in der Schliessposition des Schliesselements (22) als ein Schnappverschluss für einen der Haltebolzen (23a,23b) des Anbaugeräts (13) wirkt.
